# EUROPÄISCHE PATENTSCHRIFT

(11) **EP 1 954 508 B1**
(45) Veröffentlichungstag und Bekanntmachung des Hinweises auf die Patenterteilung: **04.09.2013**
(21) Anmeldenummer: 06818434.0
(22) Anmeldetag: 09.11.2006
(51) Int. Cl.: B42D 15/10, B42D 15/00

(54) **VERFAHREN UND VORRICHTUNG ZUR HERSTELLUNG EINES SICHERHEITSDOKUMENTES**
METHOD AND APPARATUS FOR PRODUCING A SECURITY DOCUMENT
PROCÉDÉ ET DISPOSITIF D'ÉLABORATION D'UN DOCUMENT DE SÉCURITÉ

(30) Priorität: 18.11.2005 DE 102005055548
(43) Veröffentlichungstag der Anmeldung: 13.08.2008
(73) Patentinhaber: Bundesdruckerei GmbH, 10969 Berlin (DE)
(72) Erfinder: MÜFFELMANN, Gunda, 15566 Schöneiche (DE); DEICHSEL, Andreas, 13503 Berlin (DE); EHREKE, Jens, 12587 Berlin (DE); BRAUER, Gabriele, 12355 Berlin (DE); GÄRTNER, Karl-Heinz, 14621 Schönwalde (DE); RADTKE, Michael, 12489 Berlin (DE)
(74) Vertreter: Maser, Jochen
(86) Internationale Anmeldenummer: PCT/EP2006/010736
(87) Internationale Veröffentlichungsnummer: WO 2007/057121

(56) Entgegenhaltungen:
- WO-A1-98/57299
- DE-A1- 10 204 870
- DE-A1- 19 608 757

## Beschreibung

Die Erfindung betrifft ein Verfahren und eine Vorrichtung zur Herstellung eines Sicherheitsdokumentes, das zumindest eine Datenseite und zumindest einen Chip umfasst, in dem Daten der Datenseite abgespeichert sind.

Solche Sicherheitsdokumente werden beispielsweise als Zugangskarte, Identifikationsdokumente, Teil eines Passbuches, Führerscheine oder dergleichen eingesetzt. Diese Sicherheitsdokumente werden mit Sicherheitsmerkmalen versehen, um diese vor Fälschungen und Manipulationen zu schützen. Dabei werden einzelne Daten des Dokumenteninhabers in einem Chip abgespeichert, um eine Zuordnung der Daten einer Datenseite eines solchen Sicherheitsdokumentes zu dem Dokumenteninhaber zu ermöglichen.

Solche Sicherheitsdokumente weisen jedoch den Nachteil auf, dass eine eindeutige Zuordnung des Chips zur Datenseite nicht gegeben ist, so dass Manipulationen durch Austausch eines Chips zur Datenseite des Sicherheitsdokumentes ermöglicht wären.

Aus der DE 102 04 870 A1 geht ein Verfahren zur Fälschungssicherung eines Wertträgers hervor, wobei der Wertträger einen Träger aus einem Papier oder aus Kunststofffolien umfasst. Auf diesem Träger werden Sicherheitsmerkmale beispielsweise in Form von Fasern aufgebracht. Diese können zufällig auf der Fläche des Trägers verteilt aufgebracht sein und werden bei der Fertigung des Wertdokuments auf das Ausgangsmaterial des Trägers aufgebracht.

Aus der WO 98/57299 geht ein Sicherheitsdokument mit einem Echtheitsmaterial hervor. Dieses Sicherheitsdokument weist Kennzeichen beziehungsweise Sicherheitsmerkmale auf, die in das Basis- oder Trägermaterial eingebracht werden, um als Sicherheitsmerkmal erfasst zu werden. Diese Kennzeichen weisen physikalische Eigenschaften auf, die von den physikalischen Eigenschaften des Basis- oder Trägermaterials abweichen. Diese Kennzeichen können wiederum erfasst und in einem Datenspeicher abgespeichert werden.

Aus der DE 196 08 757 A1 geht eine analoge Ausgestaltung eines Sicherheitsdokumentes zu den Sicherheitsdokumenten beziehungsweise Wertträgern gemäß den vorstehend genannten Druckschriften hervor.

Bei diesen bekannten Sicherheitsdokumenten ist es erforderlich, dass das Basis- oder Trägermaterial für eine Datenseite zusätzlich mit Sicherheitsmerkmalen zu versehen ist und hierfür ein zusätzlicher Arbeitsschritt erforderlich ist. Darüber hinaus kann die Gefahr bestehen, dass die zusätzlich aufgebrachten Kennzeichen von dem Basis- oder Trägermaterial der Datenseite abgelöst werden.

Der Erfindung liegt deshalb die Aufgabe zugrunde, ein Sicherheitsdokument mit zumindest einer Datenseite und zumindest einem Chip mit einem Sicherheitsmerkmal zu versehen, damit die eindeutige Zuordnung der Datenseite zum Chip sichergestellt ist.

Diese Aufgabe wird erfindungsgemäß durch ein Verfahren zur Herstellung eines Sicherheitsdokumentes gemäß den Merkmalen des Anspruchs 1 und ein Sicherheitsdokument gemäß den Merkmalen des Anspruchs 5 gelöst. Vorteilhafte Ausbildungen sind In den weiteren Ansprüchen angegeben.

Durch das erfindungsgemäße Verfahren zur Herstellung eines Sicherheitsdokumentes wird erzielt, dass die Datenseite eine Substratstruktur aus Papier, Karton, Pappe, Kunststoff oder textilem Material aufweist, die bei der Herstellung eine zufällige Ausrichtung der Fasern erhalten und eine zufällige Faserstruktur bilden; die für jede Datenseite einzigartig ist, wobei dadurch eine sogenannte Personalisierung der Datenseite über deren Faserstrukturen entsteht diese Faserstrukturen in einem Chip des Sicherheitsdokumentes abgespeichert werden. Dadurch wird die Struktur des Substrates,_aus der die Datenseite besteht, als Sicherheitsmerkmal verwendet. Solche Substratstrukturen weisen eine einzigartige Gestalt, Ausprägung oder datenseitenspezifische Merkmale auf, die in der Substratstruktur von Datenseiten abweichen, die nach demselben Herstellungsverfahren hergestellt werden, so dass sogenannte Personalisierdaten der Substratstruktur ebenfalls im Chip abgespeichert werden. Dadurch wird ermöglicht, dass für ein Prüfgerät die in dem Chip abgelegten Daten zur Person und zur Substratstruktur ausgelesen und die ausgelesenen Daten der Substratstruktur mit der während der Prüfung durch das Prüfgerät erfassten Informationen über die Substratstruktur verglichen werden. Sofern die Daten der abgelegten Substratstruktur mit der vom Prüfgerät erfassten Daten der Struktur nicht übereinstimmen, liegt eine Manipulation vor, die durch eine einfache Prüfung zu erkennen ist.

Vorteilhafterweise ist vorgesehen, dass die von der Substratstruktur erfassten Daten in einer Auswerteeinheit komprimiert und verschlüsselt im Chip abgelegt werden. Dadurch kann eine weitere Erhöhung der Sicherheit gegeben sein.

Die Substratstruktur wird bevorzugt mit einem Aufzeichnungsgerät in einer Aufsicht oder im Durchlicht erfasst. Beispielsweise kann das Aufzeichnungsgerät eine CCD-Kamera oder eine mit einem Laserstrahl arbeitende Optik sein, welche die Oberfläche beziehungsweise die Substratstruktur in der Aufsicht abtastet und erfasst. Des Weiteren können fotografische Aufnahmen im Durchlicht erstellt werden, wobei die unterschiedlichen Graustufen erfasst und digitalisiert werden.

Des Weiteren ist vorteilhafterweise vorgesehen, dass die Substratstruktur derjenigen Datenseite erfasst wird, auf welcher der Chip auf- oder eingebracht ist. Dadurch wird sichergestellt, dass die auf der Datenseite aufgebrachten Personalisierdaten mit den im Chip abgespeicherten Daten übereinstimmen und der Chip zu dieser Datenseite gehört.

Beim erfindungsgemäßen Sicherheitsdokument ist vorgesehen, dass die Datenseite eine Substratstruktur aus Papier, Karton, Pappe, Kunststoff oder textilem Material aufweist, die bei der Herstellung eine zufällige Ausrichtung der Fasern erhalten und eine zufällige Faserstruktur bilden; die für jede Datenseite einzigartig ist, wobei dadurch eine sogenannte Personalisierung der Datenseite über deren Faserstrukturen entsteht diese Faserstrukturen in dem Chip abgespeichert und Solche Sicherheitsdokumente können zusätzlich mit weiteren Sicherheitsmerkmalen versehen werden. Die Abspeicherung der Substratstruktur in den Chip kann gemeinsam mit weiteren Personalisierdaten vor, gleichzeitig oder nach der Abspeicherung der weiteren Daten vorgesehen sein. Bevorzugt erfolgt die Abspeicherung der Daten der Substratstruktur unmittelbar nach dem Aufbringen oder Einbringen des Chips auf oder in die Substratstruktur, so dass Manipulationen erschwert sind.

Bevorzugt ist vorgesehen, dass der zumindest eine Chip auf der mit Personalisierdaten versehenen Datenseite aufgebracht ist und die Personalisierdaten sowie die Faserstruktur dieser Datenseite im Chip abgespeichert sind.

Das Sicherheitsdokument weist bevorzugt eine Datenseite auf, in die der Chip eingebettet oder aufgebracht ist, wobei dieser bevorzugt innerhalb der Datenseite vorgesehen ist. Somit ist von außen der Datenseite zunächst nicht anzusehen, dass ein Chip darin enthalten ist. Der Chip ist bevorzugt ein Bestandteil einer Transpondereinheit, welche durch Einlaminieren oder Auflaminieren der Datenseite zugeordnet wird. Darüber hinaus können solche Ausgestaltungen der Datenseite auch dazu dienen, dass das Sicherheitsdokument als Banknote oder Label, Visasticker oder dergleichen einsetzbar ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibund und den Zeichnungen zu entnehmenden Merkmale können einzeln für sich oder zu mehreren in beliebiger Kombination erfindungsgemäß angewandt werden. Es zeigen:
- Figur 1: eine schematische Darstellung der einzelnen Verfahrensschritte zur Herstellung eines erfindungsgemä-ßen Sicherheitsdokumentes,
- Figur 2: eine schematische Darstellung des Sicherheitsdokumentes in einem Prüfgerät und
- Figur 3: eine perspektivische Ansicht eines erfindungsgemä-ßen Sicherheitsdokumentes in einem Reisepass.

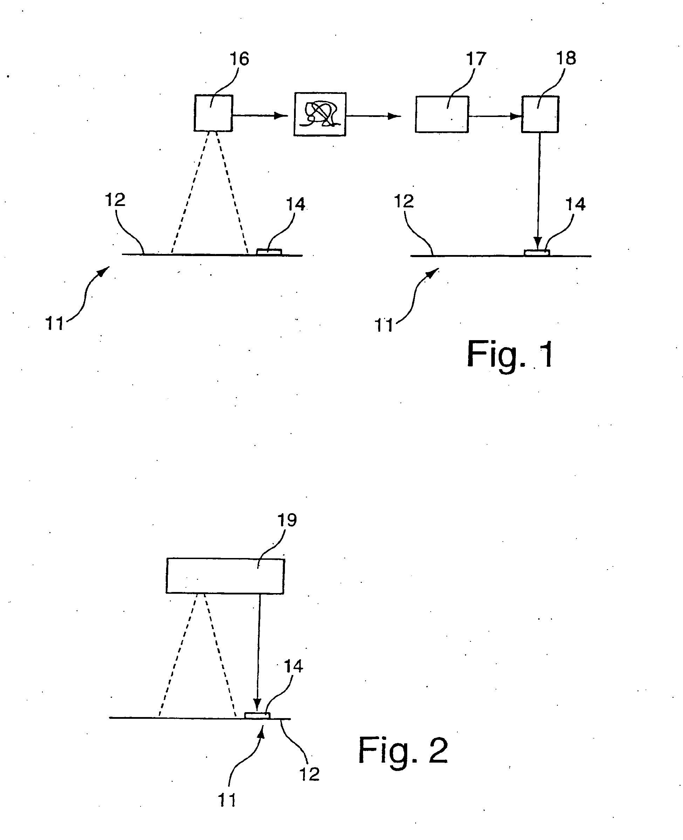

In Figur 1 ist schematisch eine Abfolge von Verfahrensschritten zur Herstellung des erfindungsgemäßen Sicherheitsdokumentes 11 dargestellt. Das Sicherheitsdokument 11 umfasst eine Datenseite 12, auf der ein Chip 14 aufgebracht ist. Dieser Chip 14 ist Teil eines Transponders, der bevorzugt kontaktlos ein- und auslesbar ist. Dieser Chip 14 ist bevorzugt in der Datenseite 12 eingebettet. Alternativ kann vorgesehen sein, dass die Datenseite 12 mit einer Schutzfolie oder Kunststofffolie abgedeckt ist, um die Datenseite 12 und den Chip 14 zu schützen und Manipulationen zu erschweren.

Die Datenseite 12 umfasst eine Substratstruktur, die sich aus dem verwendeten Material für die Datenseite 12 ergibt. Beispielsweise können Pappe, Karton, Papier, textile Materialien, vorgesehen sein. Ebenso können die Substratbestandteile in Wert- und/oder Sicherheitsdokumenten typischen Stoffe, wie beispielsweise Fasern, Pigmente, Farbstoffe mit physikalischen Eigenschaften (UV, JR ...) oder dergleichen vorgesehen sein.

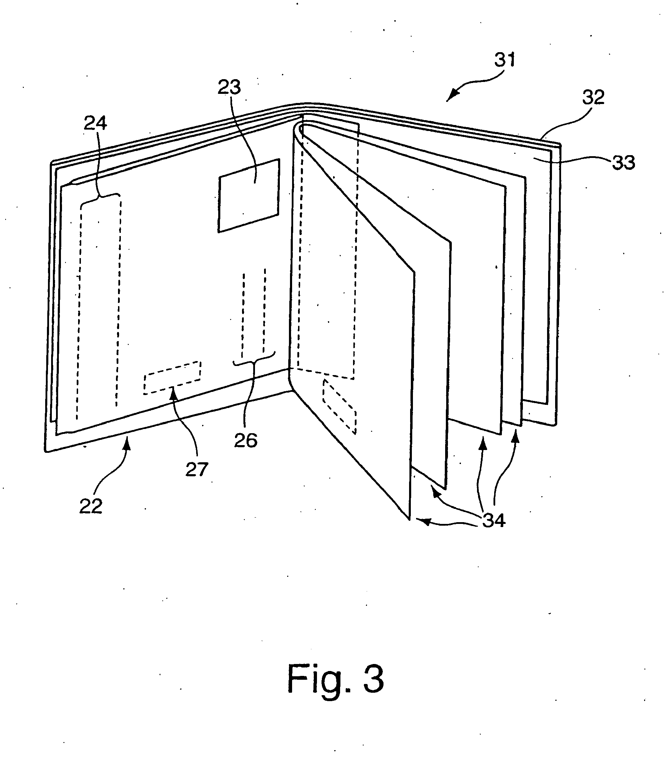

Auf der Datenseite 12 sind Personalisierdaten einer Person vorgesehen, so dass diese Datenseite 12 eine Personalisierseite bildet. Diese Datenseite 12 kann gemäß dem ICAO-Standard ausgebildet sein, deren Aufbau in Figur 3 nachfolgend näher beschrieben ist.

Durch ein Aufzeichnungsgerät 16 wird eine Substratstruktur der Datenseite 12 in der Aufsicht und/oder Durchsicht erfasst, wie dies in Figur 1 dargestellt ist. Beispielsweise kann eine Kamera vorgesehen sein, deren Optik für sichtbares Licht geeignet ist. Des Weiteren kann eine CCDKamera, eine CMOS-Kamera oder ein Aufzeichnungsgerät vorgesehen sein, das mit einem Laserstrahl arbeitet. Weitere Wellenlängen, auch im nicht sichtbaren Bereich, können zur Erfassung der Faserstruktur eingesetzt werden.

Das Aufzeichnungsgerät 16 leitet die erfassten Informationen an eine Auswerte- und Recheneinheit 17 weiter, welche die erfassten Informationen komprimiert und verschlüsselt. Über ein Schreibgerät 18 werden die verschlüsselten und komprimierten Daten in dem Chip 14 eingelesen und darin abgespeichert. Die weiteren Personalisierdaten können davor, danach öder gleichzeitig in den Chip 14 eingelesen und abgespeichert werden.

Zur Prüfung der Echtheit des Sicherheitsdokumentes 11 ist gemäß Figur 2 ein Prüfgerät 19 vorgesehen, das ein Aufzeichnungsgerät, eine Auswerte- und Recheneinheit sowie ein Lesegerät umfasst. Dadurch wird ermöglicht, das einerseits die im Chip 14 abgelegten Daten ausgelesen werden können, um diese gleichzeitig in der Auswerte- und Recheneinheit 17 mit den aktuell erfassten Informationen über die Substratstruktur der zu prüfenden Datenseite 12 zu vergleichen. Bei einer Übereinstimmung der abgespeicherten und erfassten Substratstruktur wird die Echtheit des Sicherheitsdokumentes 11 festgestellt, das heißt, dass eine Manipulation zwischen dem Chip 14 und der Datenseite 12 durch Austausch einer der beiden Elemente nicht erfolgt ist.

In Figur 3 ist das Sicherheitsdokument 11 beispielsweise als Teil eines Passbuches 31 ausgebildet. Das Sicherheitsdokument 11 ist als Personalisierungsdatenseite 22 in einem Passbuch 31 vorgesehen. Diese Personalisierungsdatenseite 22 umfasst beispielsweise gemäß dem ICAO-Standard ein Foto 23 des Dokumenteninhabers, eine OCR-maschinenlesbare ICAO-Zeile 24 und Personalisierdaten 26. Zusätzlich kann eine diffraktive Struktur eingebracht sein. Durch den Bereich 27 ist die Position des Chips 14 gekennzeichnet.

Das Passbuch 31 umfasst des Weiteren einen Bucheinband 32 mit einem Vorsatz 33. In den Bucheinband 32 sind zusätzlich zur Personalisierungsdatenseite 22 mehrere Innenseiten 34 eingenäht, die beispielsweise zur Aufnahme von Visa oder sonstigen Stempeln und Vermerken dienen. Die Sicherheitsdokumente 11 können bevorzugt in einer Laminathülle oder auf einer oder beiden Oberflächen der Datenseite 12 mit einer Kunststofffolie versehen sein.

Das Sicherheitsdokument 11 kann des Weiteren als Identifikationsdokument, Zugangskarte, Banknote, Label, Personalausweiskarte oder dergleichen eingesetzt werden.

Alle vorbeschriebenen Merkmale sind jeweils für sich erfindungswesentlich und können beliebig miteinander kombiniert werden.

## Patentansprüche

1. Verfahren zum Herstellen eines Sicherheitsdokumentes (11), das zumindest eine Datenseite (12) umfasst, welche eine Substratstruktur aufweist und zumindest einen Chip (14) umfasst, in dem Daten der Datenseite (12) abgespeichert sind, **dadurch gekennzeichnet, dass**
- die Datenseite eine Substratstruktur aus Papier, Karton, Pappe, Kunststoff oder textilem Material aufweist, die erhalten bei der Herstellung eine zufällige Ausrichtung, der Fasern und eine zufällige Faserstrukturbilden die für jede Datenseite einzigartig ist, und diese Faserstrukturen optisch erfasst werden,
- diese Substratstruktur in einer Auswerte- und Recheneinheit (17) digitalisiert wird und
- die digitalisierte Substratstruktur in dem Chip (14) abgespeichert wird.

2. Verfahren nach Anspruch 1, **dadurch gekennzeichnet, dass** die Daten der erfassten Substratstruktur von der Auswerte- und Recheneinheit (17) komprimiert und durch ein Schreibgerät (18) in dem Chip (14) abgespeichert werden.

3. Verfahren nach Anspruch 1 oder 2, **dadurch gekennzeichnet, dass** die Substratstruktur mit einem Aufzeichnungsgerät (16) in einer Aufsicht oder im Durchlicht erfasst wird.

4. Verfahren nach einem der vorhergehenden Ansprüche, **dadurch gekennzeichnet, dass** die Substratstruktur derjenigen Datenseite (12) erfasst wird, auf welcher der Chip (14) auf- oder eingebracht ist.

5. Sicherheitsdokument mit zumindest einer Datenseite (12), welche eine Substratstruktur umfasst und einem Chip (14), in dem Daten der Datenseite (12) abgespeichert sind, **dadurch gekennzeichnet**,
- die Datenseite eine Substratstruktur aus Papier, Karton, Pappe, Kunststoff oder textilem Material aufweit, die bei der Herstellung eine zufällige Ausrichtung der Fasern erhalten und eine zufällige Faserstruktur bilden für jede Datenseite einzigartig ist, und diese Faserstrukturen optisch erfasst winden, und
in dem Chip (14) abgespeichert sind.

6. Sicherheitsdokument nach Anspruch 5, **dadurch gekennzeichnet, dass** der zumindest eine Chip (14) auf der mit Personalisierdaten versehenen Datenseite (12) aufgebracht ist und die Personalisierdaten auf dem Chip (14) abgespeichert sind.

7. Sicherheitsdokument nach einem der Ansprüche 5 oder 6, **dadurch gekennzeichnet, dass** der Chip (14) Teil einer Transpondereinheit ist und in die Datenseite (12) eingebettet oder aufgebracht ist.

8. Sicherheitsdokument nach einem der Ansprüche 5 bis 7, **dadurch gekennzeichnet, dass** es als Pass, Visa, ID-Dokument, Passbuch, Zugangskarte, Führerscheine, vorläufige Zugangsberechtigungen, Banknote oder Label ausgebildet ist.

## Claims

1. A method of fabricating a security document (11) that includes at least one data page (12) which has a substrate structure and includes at least one chip (14) in which data of the data page (12) is stored, **characterised in that**
- the data page has a substrate structure made of paper, carton, cardboard, plastic or textile material, the fibres of which obtain a random orientation during the fabrication process and form a random fibre structure which is unique for each data page, and **in that** these fibre structures are optically acquired,
- said substrate structure is digitised in an evaluation and computing unit (17), and
- the digitised substrate structure is stored in the chip (14).

2. The method as claimed in claim 1, **characterised in that** the acquired substrate structure data are compressed by the evaluation and calculation unit (17) and stored in the chip (14) by means of a data writing apparatus (18).

3. The method as claimed in claim 1 or 2, **characterised in that** the substrate structure is acquired in a top view or in transmitted light using a recording apparatus (16).

4. The method as claimed in any one of the preceding claims, **characterised in that** the acquiring of the substrate structure is effected on the data page (12) on which the chip (14) is applied or in which it is inserted.

5. A security document having at least one data page (12) which includes a substrate structure and having a chip (14) in which data of the data page (12) is stored, **characterised in that** the data page has a substrate structure made of paper, carton, cardboard, plastic or textile material, the fibres of which receive a random orientation during the fabrication process and form a random fibre structure which is unique for each data page, and **in that** said fibre structures are optically acquired and stored in the chip (14).

6. The security document as claimed in claim 5, **characterised in that** the at least one chip (14) is applied on the data page (12) provided - with personalisation data and **in that** the personalisation data is stored on the chip (14).

7. The security document as claimed in any one of claims 5 or 6, **characterised in that** the chip (14) is part of a transponder unit and is embedded in, or applied on, the data page (12).

8. The security document as claimed in any one of claims 5 to 7, **characterised in that** it is realised as a passport, a visa, an ID document, a passport booklet, an access card, as driving licences, conditional access authorisations, as a bank note or a label.

## Revendications

1. Procédé destiné à réaliser un document de sécurité (11) qui comprend au moins une page de données (12) laquelle présente une structure de substrat et comprend au moins une puce (14) dans laquelle des données de la page de données (12) sont mises en mémoire, **caractérisé en ce que**
- la page de données présente une structure de substrat en papier, carton, carton-pâte, matière plastique ou matière textile dont les fibres prennent lors de la fabrication une orientation aléatoire et forment une structure fibreuse aléatoire qui est unique pour chaque page de données, et **en ce que** ces structures fibreuses sont saisies optiquement,
- cette structure de substrat est numérisée dans une unité d'évaluation et de calcul (17) et
- la structure de substrat numérisée est mise en mémoire dans la puce (14).

2. Procédé selon la revendication 1, **caractérisé en ce que** les données de la structure de substrat saisie sont comprimées par l'unité d'évaluation et de calcul (17) et mises en mémoire dans la puce (14) par un appareil d'écriture de données (18).

3. Procédé selon la revendication 1 ou 2, **caractérisé en ce que** la structure de substrat est saisie dans une vue en plan ou en lumière transmise à l'aide d'un appareil d'enregistrement (16).

4. Procédé selon l'une quelconque des revendications précédentes, **caractérisé en ce que** la structure de substrat qui est saisie est celle de la page de données (12) sur laquelle est appliquée ou dans laquelle est intégrée la puce (14).

5. Document de sécurité avec au moins une page de données (12) qui comprend une structure de substrat et avec une puce (14) dans laquelle des données de la page de données (12) sont mises en mémoire, **caractérisé en ce que** la page de données présente une structure de substrat en papier, carton, carton-pâte, matière plastique ou matière textile dont les fibres prennent lors de la fabrication une orientation aléatoire et forment une structure fibreuse aléatoire qui est unique pour chaque page de données, et **en ce que** ces structures fibreuses sont saisies optiquement et mises en mémoire dans la puce (14).

6. Document de sécurité selon la revendication 5, **caractérisé en ce que** ladite au moins une puce (14) est appliquée sur la page de données (12) pourvue de données de personnalisation, et que les données de personnalisation sont mises en mémoire sur la puce (14).

7. Document de sécurité selon l'une des revendications 5 ou 6, **caractérisé en ce que** la puce (14) fait partie d'un transpondeur et est intégrée dans ou appliqué sur la page de données (12).

8. Document de sécurité selon l'une quelconque des revendications 5 à 7, **caractérisé en ce qu'**il est réalisé en tant que passeport, visa, document d'identification, livret de passeport, carte d'accès, permis de conduire, autorisations d'accès provisoires, billet de banque ou label.
